# EUROPÄISCHE PATENTSCHRIFT

(11) **EP 2 936 958 B1**
(45) Veröffentlichungstag und Bekanntmachung des Hinweises auf die Patenterteilung: **05.10.2016**
(21) Anmeldenummer: 15401029.2
(22) Anmeldetag: 14.04.2015
(51) Int. Cl.: A01B 71/04, A01C 5/06

(54) **DOPPELSCHEIBENSCHAR**
DOUBLE DISC COULTER
SOC À DOUBLE DISQUE

(30) Priorität: 22.04.2014 DE 102014105328
(43) Veröffentlichungstag der Anmeldung: 28.10.2015
(73) Patentinhaber: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE)

(56) Entgegenhaltungen:
- DE-A1- 3 004 452
- DE-A1-102012 014 102
- DE-U1-202012 006 653
- US-A- 2 192 948
- US-A- 2 849 261

## Beschreibung

Die vorliegende Erfindung betrifft eine Doppelscheibenschar gemäß dem Oberbegriff des Anspruchs 1.

Eine solche Doppelscheibenschar ist in der EP 2 422 599 B1 offenbart, wobei mittels Drehlagerungen die beiden V-förmig zueinander angeordneten Scharscheiben frei drehbar an einem Scharhalter angeordnet sind. Für jede Scharscheibe ist je eine Lagerung umfassend ein Lagerelement, einen Außenring und einen Innenring vorgesehen. Eine Achswelle der Drehlagerung geht durch den Scharhalter, wobei die entsprechende Durchgangsöffnung und die Achswelle formschlüssig und unverdrehbar miteinander zusammenwirken. In einem sich dem Formschlussbereich anschließenden Wellenbereich weist die Achswelle ein Außengewinde auf, auf das zwei Zwischenringe mit Innengewinde aufgeschraubt werden. Die Zwischenringe stützen sich mit einer Seite an dem Scharhalter ab, so dass die Achswelle an dem Scharhalter fixiert und befestigt ist. Auf einem Aufnahmebereich der Zwischenringe werden die Lager der Drehlagerungen aufgesteckt.

Hierbei ist es erforderlich, die Doppelscheibenschar vergleichsweise breit zu bauen und durch die Verwendung von Achswelle, Scharhalter, Innenringen und Außenringen muss sehr auf die Stabilität und die Verteilung von radialen und axialen Kräften geachtet werden.

DE 30 04 452 A1 offenbart eine Doppelscheibenschar gemäß dem Oberbegriff des Anspruchs 1.

DE 20 2012 006 653 U1 offenbart eine Lagereinheit für ein Scheibenschar mit einem Außenring und einem zweiteiligen Innenring des Lagers, so dass die Teilebene bei einem einreihigen Kugellager in der Mitte der Laufbahn der Kugeln und bei einem zweireihigen Kugellager zwischen den beiden Laufbahnen der beiden Kugelreihen verläuft. Dies ermöglicht einen spielfreien Einsatz der Lagereinheit, die wegen des zweiteiligen Innenrings vorgespannt eingesetzt werden kann.

DE 10 2012 014 102 A1 offenbart eine an einem Scharscheibenhalter drehbar gelagerte Scharscheibe. Ein Lager der Scharscheibe umfasst beispielsweise ein Wälzlager, einen Außenring und einen Innenring. Die Scharscheibe ist im Wesentlichen eben ausgebildet und wird mit einem zentralen Loch auf den Achsstumpf des Scharscheibenhalters aufgebracht und dort mittels eines zentralen Spannelements festgespannt. Der Achsstumpf kann von einem hülsenförmigen Lagertopf gebildet werden, der drehbar auf einem feststehenden Achszapfen sitzt und der starr mit einem Tragarm verbunden ist. Zwischen Achsstumpf und Achszapfen ist eine Drehlageranordnung vorgesehen, die eine eigene Baugruppe bildet und durch einen zentralen Befestigungsbolzen an dem Achszapfen befestigt ist.

Daher ist es Aufgabe der vorliegenden Erfindung, eine stabile, für radiale und axiale Kraftverteilung optimierte und für kleine Säfurchenabstände verwendbare Doppelscheibenschar zur Verfügung zu stellen.

Die Aufgabe wird gelöst durch die Doppelscheibenschar nach Anspruch 1. Bevorzugte Ausführungsformen sind in den Unteransprüchen offenbart.

Eine Doppelscheibenschar umfasst eine erste Scharscheibe, die durch ein erstes Lager mit einem ersten Innenring drehbar gelagert ist, eine zweite Scharscheibe, die durch ein zweites Lager mit einem zweiten Innenring drehbar gelagert ist, wobei die erste Scharscheibe und die zweite Scharscheibe zueinander geneigt angeordnet sind. Zudem umfasst die Doppelscheibenschar einen gemeinsamen Außenring, der den ersten Innenring und den zweiten Innenring zumindest teilweise umgibt, wobei das erste Lager in einem ersten Zwischenraum zwischen dem gemeinsamen Außenring und dem ersten Innenring und wobei das zweite Lager in einem zweiten Zwischenraum zwischen dem gemeinsamen Außenring und dem zweiten Innenring angeordnet ist.

Durch die Verwendung eines gemeinsamen Außenrings kann die Doppelscheibenschar im Vergleich zu einer Doppelscheibenschar mit je einem Außenring pro Innenring schmaler gebaut werden, wobei trotz der schmalen Bauweise eine belastbare Scharlagerung für die zwei in einem flachen Winkel zueinander stehenden Scharscheiben erreicht wird. Die Scharlagerung kann die Elemente der Doppelscheibenschar umfassen, die für die drehbare Lagerung der Scharscheiben verwendet werden. Die Doppelscheibenschar ist vorteilhafter Weise im Wesentlichen spiegelsymmetrisch zu einer Längsebene des gemeinsamen Außenrings ausgebildet. Das erste und das zweite Lager können als Kugellager ausgebildet sein.

Der gemeinsame Außenring kann zwei Fortsätze mit je mindestens einer Durchgangsbohrung umfassen, wobei die Fortsätze derart ausgebildet sind, dass zwischen den beiden Fortsätzen ein Teil eines Scharhalters mit mindestens einer Durchgangsöffnung angeordnet werden kann, und dass mindestens ein Sicherungselement durch die Durchgangsbohrungen der zwei Fortsätze und durch die mindestens eine Durchgangsöffnung des Scharhalters einbringbar ist, um eine feste, aber lösbare Verbindung zwischen der Doppelscheibenschar und dem Scharhalter zu bilden.

Die Fortsätze können sich jeweils als Kreissegment parallel zu beiden Seiten der Längsachse des gemeinsamen Außenrings erstrecken. Durch solche Kreissegmente können radiale und axiale Kräfte zwischen dem Scharhalter, dem mindestens einen Sicherungselement und den Fortsätzen verteilt werden, wodurch diese Verbindung des gemeinsamen Außenrings (mittels der Fortsätze) und des Scharhalters Stabilitätsvorteile bietet.

Der erste Innenring bzw. der zweite Innenring können jeweils mittels mindestens einer Drehsicherung drehsicher mit der ersten Scharscheibe bzw. der zweiten Scharscheibe verbunden sein. Um die mindestens eine Drehsicherung aufnehmen zu können, weist die erste Scharscheibe bzw. die zweite Scharscheibe und der erste Innenring bzw. der zweite Innenring jeweils mindestens eine Aussparung auf (wobei die Anzahl der Aussparungen vorzugsweise der Anzahl der Drehsicherungen entspricht), welche die mindestens eine Drehsicherung aufnehmen können, so dass eine formschlüssige Verbindung erreicht wird.

Der gemeinsame Außenring kann als einteiliges Gussteil ausgebildet sein. Dadurch wird eine hohe Stabilität des gemeinsamen Außenrings gewährleistet.

In einer Ausführungsform kann die erste Scharscheibe bzw. die zweite Scharscheibe in einem Zentralbereich mindestens eine Scheibenbohrung und der erste Innenring bzw. der zweite Innenring mindestens eine Innenringbohrung mit einem Innengewinde umfassen. Ein erster Teil einer Verbindungsvorrichtung kann durch die mindestens eine Scheibenbohrung der ersten Scharscheibe bzw. der zweiten Scharscheibe aufgenommen und ein zweiter Teil der Verbindungsvorrichtung mit einem Außengewinde durch die mindestens eine Innenringbohrung des ersten Innenrings bzw. des zweiten Innenrings aufgenommen sein, so dass eine feste, aber lösbare Verbindung zwischen der ersten Scharscheibe bzw. der zweiten Scharscheibe und dem ersten Innenring bzw. dem zweiten Innenring ausgebildet ist.

Vorzugsweise ist die Anzahl der Scheibenbohrungen und der Innenringbohrungen jeweils gleich groß. So kann vorgesehen sein, dass die erste Scharscheibe eine Scheibenbohrung Nₛ₁=1, die zweite Scharscheibe eine Scheibenbohrung Nₛ₂=1, der erste Innenring eine Innenringbohrung Nₗ₁=1 und der zweite Innenring eine Innenringbohrung Nₗ₂=1 aufweisen. In anderen Ausführungsformen können Nₛ₁ = Nₛ₂= Nₗ₁ = Nₗ₂= 2 oder 3 oder 4 oder 5 sein.

Die Verbindungsvorrichtungen können Schrauben sein, deren Köpfe formschlüssig in die Scheibenbohrungen passen. Die Schraubenköpfe können dabei derart ausgebildet sein, dass sie mit der Oberfläche der Scharscheiben auf einer Höhe abschließen und daher nicht über die Ebene der Scharscheiben hinausreichen.

Die Schrauben können jedoch auch so ausgeführt sein, dass ihre Köpfe auf der Oberfläche der Scharscheiben aufliegen, so dass die Köpfe nicht auf einer Höhe mit der Oberfläche der Scharscheiben abschließen, sondern über sie hinausragen.

In einer anderen Ausführungsform kann die erste Scharscheibe bzw. die zweite Scharscheibe in einem Zentralbereich eine Scheibenbohrung und der erste Innenring bzw. der zweite Innenring einen Zapfen mit einem Außengewinde umfassen. Der Zapfen reicht durch die Scheibenbohrung hindurch und bildet mittels einer aufgebrachten Verbindungsvorrichtung mit einem Innengewinde, wie beispielsweise eine Mutter, eine feste, aber lösbare Verbindung zwischen der ersten Scharscheibe bzw. der zweiten Scharscheibe und dem ersten Innenring bzw. dem zweiten Innenring. Diese Ausführungsform ermöglicht die Verwendung eines sehr stabilen Innenrings, der nicht durch eine Innenringbohrung geschwächt ist. Bei im Wesentlichen als ebene Scheiben ausgebildete Scharscheiben kann als nachteilig angesehen werden, dass die Zapfen des Innengewindes und die aufgebrachten Verbindungsvorrichtungen mit Innengewinde über die Ebene der Scharscheiben hinausreichen. Bei der Bodenbearbeitung kann sich Erde an den hervorstehenden Elementen ansetzen und zudem wird mehr Platz beansprucht.

Die erste Scharscheibe und die zweite Scharscheibe können als im Wesentlichen ebene Scheiben ausgebildet sein. Auf der ebenen Scheibe lagert sich bei der Bodenbearbeitung im Allgemeinen weniger Erde ab im Vergleich zu einer nicht ebenen Scheibe, allerdings hauptsächlich dann, wenn die Scharscheiben keine von ihrer Oberfläche hervorstehenden Elemente aufweisen.

Es kann auch vorgesehen sein, dass die erste Scharscheibe bzw. die zweite Scharscheibe eine zentrale, schalenförmige Wölbung und der erste Innenring bzw. der zweite Innenring eine zentrale, schalenförmige Vertiefung umfassen, wobei die schalenförmige Wölbung und die schalenförmige Vertiefung derart ausgebildet sind, dass eine formschlüssige Passung zwischen der schalenförmigen Wölbung und der schalenförmigen Vertiefung besteht. Die schalenförmige Wölbung und die schalenförmige Vertiefung ermöglichen, dass der Zapfen des Innengewindes und die aufgebrachte Verbindungsvorrichtung mit Innengewinde nicht über die Ebene der Scharscheibe hinausreichen. Um zu vermeiden, dass sich in der zentralen, schalenförmigen Wölbung der Scharscheibe bei der Bodenbearbeitung Erde anlagert, kann eine Abdeckung der zentralen, schalenförmigen Wölbung vorgesehen sein, die im Wesentlichen auf Höhe der Ebene der Scharscheibe abschließt.

Solch eine Abdeckung kann an dem Zapfen eines Innenrings und/oder an der Verbindungsvorrichtung mit Innengewinde angebracht werden oder beispielsweise einteilig mit der Verbindungsvorrichtung ausgebildet sein.

In einem ersten Bereich bzw. in einem zweiten Bereich, in dem der erste Innenring bzw. der zweite Innenring, die erste Scharscheibe bzw. die zweite Scharscheibe und der gemeinsame Außenring aneinander grenzen, kann eine erste Dichtungsvorrichtung bzw. eine zweite Dichtungsvorrichtung angeordnet sein. Die Dichtungsvorrichtungen verhindern ein Eindringen von Fremdstoffen in das erste bzw. das zweite Lager und/oder den ersten bzw. den zweiten Zwischenraum zwischen dem gemeinsamen Außenring und dem ersten bzw. dem zweiten Innenring.

Weitere Merkmale und Vorteile der Erfindung werden nachfolgend anhand der beispielhaften Fig. en erläutert. Dabei zeigt
- Fig. 1: eine Schrägansicht einer Doppelscheibenschar mit Scharhalter,
- Fig. 2: eine Seitenansicht einer ersten Ausführungsform einer Doppelscheibenschar,
- Fig. 3: eine Detailansicht von Fig. 2,
- Fig. 4: eine Seitenansicht einer zweiten Ausführungsform einer Doppelscheibenschar,
- Fig. 5: eine Detailansicht von Fig. 4,
- Fig. 6: eine Seitenansicht einer dritten Ausführungsform einer Doppelscheibenschar,
- Fig. 7: eine Detailansicht von Fig. 6,
- Fig. 8: eine Seitenansicht einer vierten Ausführungsform einer Doppelscheibenschar und
- Fig. 9: eine Detailansicht von Fig. 8.

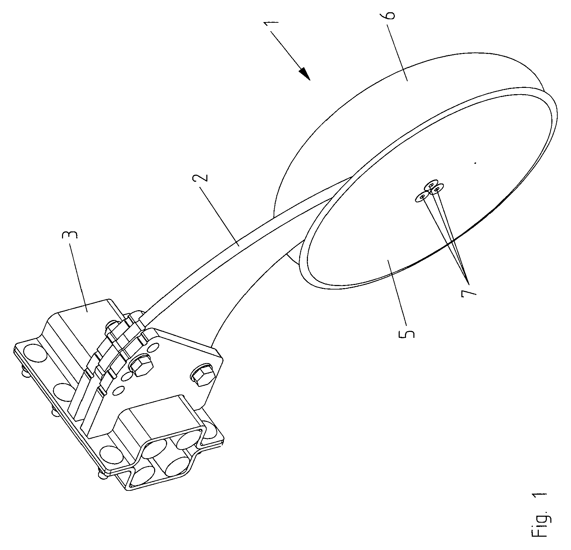

In der Fig. 1 ist eine Schrägansicht einer Doppelscheibenschar 1, eines Scharhalters 2 und eines Tragbalkens 3 dargestellt. Der Scharhalter 2 ist mit einem Ende mit dem Tragbalken 3, beispielsweise einer Sämaschine verbunden, an dem anderen Ende 4 des Scharhalters 2 (nicht gezeigt) sind die beiden Scharscheiben 5, 6 der Doppelscheibenschar 1 zueinander geneigt angeordnet. Die beiden Scharscheiben 5, 6 sind mittels Lagern drehbar gelagert, so dass sie bei einer Bodenbearbeitung durch Abrollen in einem oberen Bereich des Bodens Säfurchen ausbilden können.

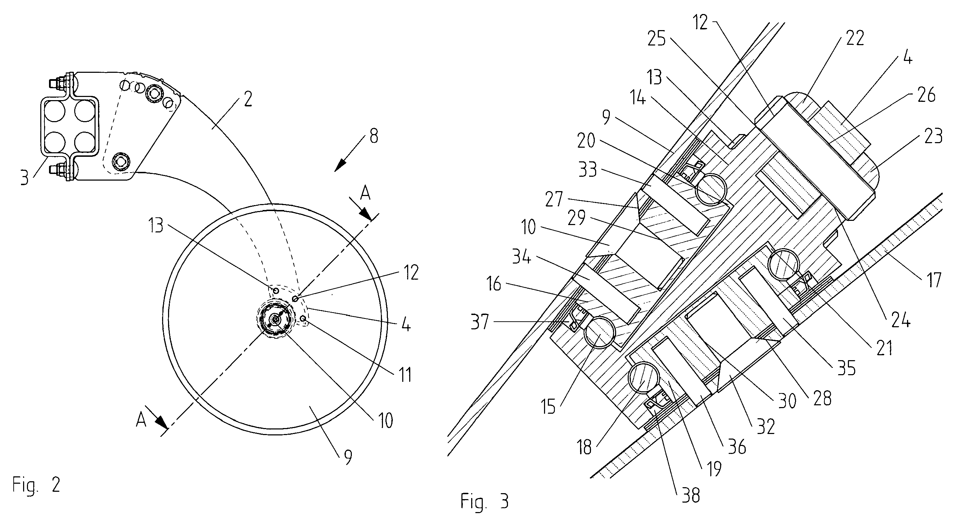

Ein Scharlager der Doppelscheibenschar 1, an dem die Scharscheiben 5, 6 mittels Verbindungsmitteln 7 und ein Ende des Scharhalters 2 angeordnet sind und das die Lager für die drehbare Lagerung der Scharscheiben 5, 6 umfasst, kann verschiedenartig ausgebildet sein, wie aus den Fig. 2 bis 9 ersichtlich wird.

Fig. 2 zeigt eine Seitenansicht einer ersten Ausführungsform einer Doppelscheibenschar 8. Die dargestellte erste Scharscheibe 9 ist mittels einer ersten Verbindungsvorrichtung 10 mit einem ersten Innenring (nicht dargestellt) verbunden. Gestrichelt dargestellt ist ein Teil 4 des Scharhalters 2 und die Sicherungselemente 11, 12, 13, die für eine Verbindung des Scharhalters 2 mit dem gemeinsamen Außenring 14 sorgen.

In Fig. 3 ist eine vergrößerte Detailansicht der Doppelscheibenschar 8 entlang des Schnitts A-A der Fig. 2 gezeigt. Die erste Scharscheibe 9 ist durch ein erstes Lager 15 mit dem ersten Innenring 16 drehbar gelagert, und die zweite Scharscheibe 17 ist durch ein zweites Lager 18 mit einem zweiten Innenring 19 drehbar gelagert. Die erste Scharscheibe 9 und die zweite Scharscheibe 17 sind in der Darstellung in einem Winkel von 13° zueinander geneigt angeordnet.

Der gemeinsame Außenring 14 umgibt den ersten Innenring 16 und den zweiten Innenring 19 zumindest teilweise. Das erste Lager 15 ist in einem ersten Zwischenraum 20 zwischen dem gemeinsamen Außenring 14 und dem ersten Innenring 16 und das zweite Lager 18 ist in einem zweiten Zwischenraum 21 zwischen dem gemeinsamen Außenring 14 und dem zweiten Innenring 19 angeordnet.

Der gemeinsame Außenring 14 weist zwei Fortsätze 22, 23 mit je drei Durchgangsbohrungen (siehe Fig. 2) auf, von denen hier je eine Durchgangsbohrung 24, 25 erkennbar ist. Die beiden Fortsätze 22, 23 sind derart ausgebildet, dass zwischen ihnen ein Teil 4 des Scharhalters 2 mit insgesamt drei Durchgangsöffnungen (siehe Fig. 2), von denen hier eine Durchgangsöffnung 26 erkennbar ist, anordbar ist. Jeweils ein Sicherungselement 11, 12, 13 ist durch zwei Durchgangsbohrungen 24, 25 der zwei Fortsätze 22, 23 und durch eine Durchgangsöffnung 26 des Scharhalters 2 eingebracht, wodurch eine feste, aber lösbare Verbindung zwischen der Doppelscheibenschar 8 und dem Scharhalter 2 gebildet wird.

Die erste Scharscheibe 5 und die zweite Scharscheibe 6 sind als im Wesentlichen ebene Scheiben ausgebildet. In einem Zentralbereich umfasst die erste Scharscheibe 5 bzw. die zweite Scharscheibe 6 eine Scheibenbohrung 27, 28.

Der erste Innenring 16 bzw. der zweite Innenring 19 umfassen entsprechend eine Innenringbohrung 29, 30 mit einem Innengewinde. Ein erster Teil einer Verbindungsvorrichtung 10 ist durch die Scheibenbohrung 27, 28 der ersten Scharscheibe 5 bzw. der zweiten Scharscheibe 6 aufgenommen, und ein zweiter Teil der Verbindungsvorrichtung 10, 32 mit einem Außengewinde ist durch die Innenringbohrung 29, 30 des ersten Innenrings 16 bzw. des zweiten Innenrings 19 aufgenommen. Dadurch wird eine feste, aber lösbare Verbindung zwischen der ersten Scharscheibe 5 bzw. der zweiten Scharscheibe 6 und dem ersten Innenring 29 bzw. dem zweiten Innenring 30 ausgebildet. In der Darstellung ist die Verbindungsvorrichtung 10, 32 als eine Schraube dargestellt, deren Kopf formschlüssig in die Scheibenbohrung 27, 28 passt. Die Schraubenköpfe sind derart ausgebildet, dass sie mit der Oberfläche der Scharscheiben 5, 6 auf einer Höhe abschließen und daher nicht über die Ebene der Scharscheiben 5, 6 hinausreichen.

Um ein mögliches Verdrehen der Scharscheiben 5, 6 relativ zu dem Innenring 16, 19 zu vermeiden, umfasst die Doppelscheibenschar 8 zudem vier Drehsicherungen 33, 34, 35, 36, wobei der erste Innenring 16 mittels zwei dieser Drehsicherungen 33, 34 mit der ersten Scharscheibe 5 und der zweite Innenring 19 mittels der anderen zwei Drehsicherungen 35, 36 drehsicher mit der zweiten Scharscheibe 6 verbunden ist. Um die Drehsicherungen 33, 34, 35, 36 aufnehmen zu können, weisen die Scharscheiben 5, 6 und die Innenringe 16, 19 jeweils Aussparungen auf, welche die Drehsicherung 33, 34, 35, 36 aufnehmen können, so dass eine formschlüssige Verbindung erreicht wird.

In einem ersten Bereich bzw. in einem zweiten Bereich, in dem der erste Innenring 16 bzw. der zweite Innenring 19, die erste Scharscheibe 5 bzw. die zweite Scharscheibe 6 und der gemeinsame Außenring 14 aneinander grenzen, ist eine erste Dichtungsvorrichtung 37 bzw. eine zweite Dichtungsvorrichtung 38 angeordnet. Die Dichtungsvorrichtungen 37, 38 verhindern ein Eindringen von Fremdstoffen in das erste Lager 15 bzw. das zweite Lager 18 und/oder den ersten Zwischenraum 20 bzw. den zweiten Zwischenraum 21 zwischen dem gemeinsamen Außenring 14 und dem ersten Innenring 16 bzw. dem zweiten Innenring 19.

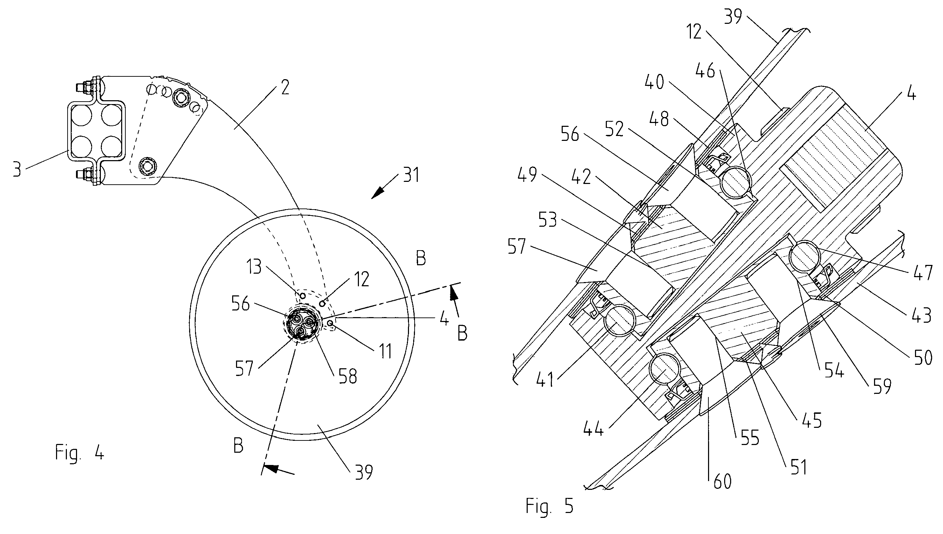

Fig. 4 zeigt eine Seitenansicht einer zweiten Ausführungsform einer Doppelscheibenschar 31. Die dargestellte erste Scharscheibe 39 ist mittels dreier Verbindungsvorrichtungen 56, 57, 58 mit einem ersten Innenring (nicht dargestellt) verbunden. Gestrichelt dargestellt ist, wie in der Fig. 2, die Verbindung des Endes 4 des Scharhalters 2 mit dem gemeinsamen Außenring 40.

In Fig. 5 ist eine vergrößerte Detailansicht der Doppelscheibenschar 39 entlang des Schnitts B-B der Fig. 4 gezeigt. Wie in der ersten Ausführungsform 8 ist die erste Scharscheibe 39 durch ein erstes Lager 41 mit dem ersten Innenring 42 und die zweite Scharscheibe 43 durch ein zweites Lager 44 mit einem zweiten Innenring 45 drehbar gelagert. Die erste Scharscheibe 39 und die zweite Scharscheibe 43 sind in der Darstellung in einem Winkel von 13° zueinander geneigt angeordnet.

Der gemeinsame Außenring 40 umgibt, wie in der ersten Ausführungsform 8, den ersten Innenring 42 und den zweiten Innenring 45 zumindest teilweise. Das erste Lager 41 ist in einem ersten Zwischenraum 46 zwischen dem gemeinsamen Außenring 40 und dem ersten Innenring 42 und das zweite Lager 44 ist in einem zweiten Zwischenraum 47 zwischen dem gemeinsamen Außenring 40 und dem zweiten Innenring 45 angeordnet.

Die feste, aber lösbare Verbindung zwischen der Doppelscheibenschar 31 und dem Ende 4 des Scharhalters 2 wird, wie in der Fig. 3 bereits beschrieben, gebildet.

Die erste Scharscheibe 39 und die zweite Scharscheibe 43 sind als im Wesentlichen ebene Scheiben ausgebildet. In einem Zentralbereich umfassen die erste Scharscheibe 39 bzw. die zweite Scharscheibe 43 jeweils drei Scheibenbohrungen (siehe Fig. 4), von denen hier jeweils zwei Scheibenbohrungen 48, 49, 50, 51 erkennbar sind.

Der erste Innenring 42 bzw. der zweite Innenring 45 umfassen entsprechend jeweils drei Innenringbohrungen mit Innengewinde, von denen hier jeweils zwei Innenringbohrungen 52, 53, 54, 55 erkennbar sind. Um eine feste, aber lösbare Verbindung zwischen der ersten Scharscheibe 39 bzw. der zweiten Scharscheibe 43 und dem ersten Innenring 42 bzw. dem zweiten Innenring 45 auszubilden, ist jeweils ein erster Teil einer Verbindungsvorrichtung 56, 57, 59, 60 durch eine Scheibenbohrung 48 - 51 der ersten Scharscheibe 39 bzw. der zweiten Scharscheibe 43 und ein zweiter Teil der Verbindungsvorrichtung 56 - 60 mit einem Außengewinde durch eine Innenringbohrung 52 - 55 des ersten Innenrings 42 bzw. des zweiten Innenrings 45 aufgenommen. Dies gilt für die insgesamt sechs Innenringbohrungen 52 - 55, sechs Scheibenbohrungen 48 - 51 und sechs Verbindungsvorrichtungen 56 - 60. In der Darstellung sind die Verbindungsvorrichtungen 56 - 60 als Schrauben dargestellt, deren Köpfe formschlüssig in die Scheibenbohrungen 48 - 51 passen. Die Schraubenköpfe sind derart ausgebildet, dass sie mit der Oberfläche der Scharscheiben 39, 43 auf einer Höhe abschließen und daher nicht über die Ebene der Scharscheiben 39, 43 hinausreichen.

Auch in der zweiten Ausführungsform 31 sind wie in der ersten Ausführungsform 8 Dichtungsvorrichtungen vorhanden.

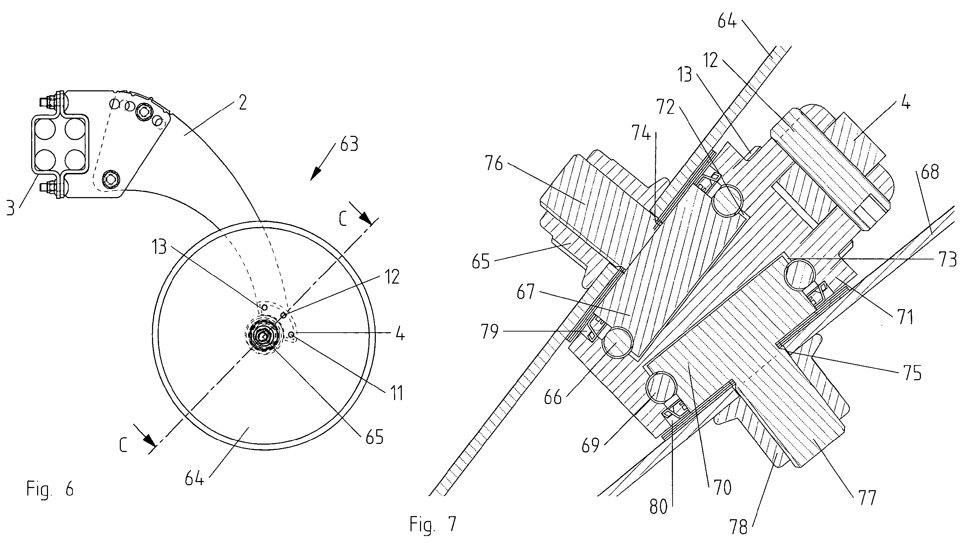

Fig. 6 zeigt eine Seitenansicht einer dritten Ausführungsform einer Doppelscheibenschar 63. Die dargestellte erste Scharscheibe 64 ist mittels einer Mutter 65 mit einem ersten Innenring (nicht dargestellt) verbunden. Gestrichelt dargestellt ist, wie in den Fig. 2 und 4, ein Teil des Scharhalters 2 und die Verbindung des Endes 4 des Scharhalters 2 mit dem gemeinsamen Außenring 71. Statt der Mutter 65 kann auch eine andere Verbindungsvorrichtung mit einem Innengewinde verwendet werden.

In Fig. 7 ist eine vergrößerte Detailansicht der Doppelscheibenschar 63 entlang des Schnitts C-C der Fig. 6 gezeigt. Wie in der ersten 8 und der zweiten 31 Ausführungsform ist die erste Scharscheibe 64 durch ein erstes Lager 66 mit dem ersten Innenring 67 und die zweite Scharscheibe 68 durch ein zweites Lager 69 mit einem zweiten Innenring 70 drehbar gelagert. Die erste Scharscheibe 64 und die zweite Scharscheibe 68 sind in der Darstellung in einem Winkel von 13° zueinander geneigt angeordnet.

Der gemeinsame Außenring 71 umgibt, wie in der ersten 8 und der zweiten 31 Ausführungsform, den ersten Innenring 67 und den zweiten Innenring 70 zumindest teilweise. Das erste Lager 66 ist in einem ersten Zwischenraum 72 zwischen dem gemeinsamen Außenring 71 und dem ersten Innenring 67 und das zweite Lager 69 ist in einem zweiten Zwischenraum 73 zwischen dem gemeinsamen Außenring 71 und dem zweiten Innenring 70 angeordnet.

Die feste, aber lösbare Verbindung zwischen der Doppelscheibenschar 63 und dem Scharhalter 2 wird, wie in den Fig. 3 und 5 bereits beschrieben, gebildet.

Die erste Scharscheibe 64 und die zweite Scharscheibe 68 umfassen in einem Zentralbereich jeweils eine Scheibenbohrung 74, 75. Der erste Innenring 67 und der zweite Innenring 70 umfassen jeweils einen Zapfen 76, 77 mit einem Außengewinde, der durch die jeweilige Scheibenbohrung 74, 75 der ersten 64 bzw. der zweiten Scharscheibe 68 hindurch reicht. Mittels einer auf das Außengewinde aufgebrachten Mutter 65, 78, die ein Innengewinde umfasst, wird eine feste, aber lösbare Verbindung zwischen der ersten Scharscheibe 64 bzw. der zweiten Scharscheibe 68 und dem ersten Innenring 67 bzw. dem zweiten Innenring 70 gebildet. Der Zapfen 76, 77 des Innenrings 67, 70 und die aufgebrachte Mutter 65, 78 reichen hierbei über die Ebene der Scharscheibe 64, 68 hinaus.

Auch in der dritten Ausführungsform 63 sind wie in der ersten 8 und der zweiten 31 Ausführungsform Dichtungsvorrichtungen 79, 80 vorhanden.

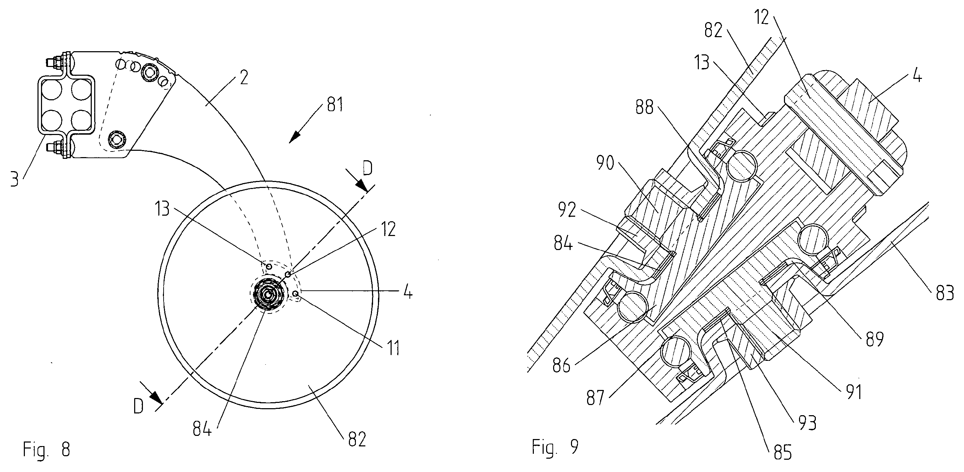

Die in der Fig. 8 dargestellte vierte Ausführungsform der Doppelscheibenschar 81 entspricht im Wesentlich der dritten Ausführungsform 63, wobei die Scharscheiben jedoch zentrale, schalenförmige Wölbungen und die Innenringe zentrale, schalenförmige Vertiefungen aufweisen.

In der Fig. 9 ist eine vergrößerte Detailansicht der Doppelscheibenschar 81 entlang des Schnitts D-D der Fig. 8 gezeigt. Die erste Scharscheibe 82 bzw. die zweite Scharscheibe 83 umfassen eine zentrale, schalenförmige Wölbung 84, 85 und der erste Innenring 86 bzw. der zweite Innenring 87 eine zentrale, schalenförmige Vertiefung 88, 89. Die schalenförmigen Wölbungen 84, 85 und die schalenförmigen Vertiefungen 88, 89 sind derart ausgebildet, dass eine formschlüssige Passung zwischen schalenförmiger Wölbung 84, 85 und schalenförmiger Vertiefung 88, 89 besteht.

Die schalenförmigen Wölbungen 84, 85 und die schalenförmigen Vertiefungen 88, 89 ermöglichen, dass die Zapfen der Innenringe 86, 87 und die aufgebrachten Muttern 92, 93 nicht über die Ebene der Scharscheiben 82, 83 hinausreichen.

Es folgen 5 Blatt mit 9 Figuren.

Die Bezugszeichen sind dabei wie folgt belegt:
- 1: 1. Ausführungsform der Doppelscheibenschar
- 2: Scharhalter
- 3: Tragbalken
- 4: Ende des Scharhalters 2
- 5: 1. Scharscheibe
- 6: 2. Scharscheibe
- 7: Verbindungsmittel
- 8: 1. Ausführungsform Doppelscheibenschar
- 9: 1. Scharscheibe
- 10: 1. Verbindungsvorrichtung
- 11: Sicherungselement
- 12: Sicherungselement
- 13: Sicherungselement
- 14: gemeinsamer Außenring
- 15: 1. Lager
- 16: 1. Innenring
- 17: 2. Scharscheibe
- 18: 2. Lager
- 19: 2. Innenring
- 20: 1. Zwischenraum
- 21: 2. Zwischenraum
- 22: 1. Fortsatz
- 23: 2. Fortsatz
- 24: Durchgangsbohrung
- 25: Durchgangsbohrung
- 26: Durchgangsöffnung
- 27: 1. Scheibenbohrung
- 28: 2. Scheibenbohrung
- 29: 1. Innenringbohrung
- 30: 2. Innenringbohrung
- 31: 2. Ausführungsform der Doppelscheibenschar
- 32 2.: Verbindungsvorrichtung
- 33-36: Drehsicherung
- 37-38: Dichtungsvorrichtung
- 39: 1. Scharscheibe
- 40: gemeinsamer Außenring
- 41: 1. Lager
- 42: 1. Innenring
- 43: 2. Scharscheibe
- 44: 2. Lager
- 45: 2. Innenring
- 46: 1. Zwischenraum
- 47: 2. Zwischenraum
- 48-51: Scheibenbohrung
- 52-55: Innenringbohrung
- 56-60: Verbindungsvorrichtung
- 63: 3. Ausführungsform der Doppelscheibenschar
- 64: 1. Scharscheibe
- 65: Mutter
- 66: 1. Lager
- 67: 1. Innenring
- 68: 2. Scharscheibe
- 69: 2. Lager
- 70: 2. Innenring
- 71: gemeinsamer Außenring
- 72: 1. Zwischenraum
- 73: 2. Zwischenraum
- 74-75: Scheibenbohrung
- 76-77: Zapfen
- 78: Mutter
- 79-80: Dichtungsvorrichtung
- 81: 4. Ausführungsform der Doppelscheibenschar
- 82: 1. Scharscheibe
- 83: 2. Scharscheibe
- 84-85: schalenförmige Wölbung
- 86: 1. Innenring
- 87: 2. Innenring
- 88-89: schalenförmige Vertiefung
- 90-91: Zapfen
- 92-93: Mutter

## Patentansprüche

1. Doppelscheibenschar (1, 8, 31, 63, 81) umfassend eine erste Scharscheibe (5, 9, 39, 64, 82), die durch ein erstes Lager (15, 41, 66) mit einem ersten Innenring (16, 42, 67, 86) drehbar gelagert ist, und eine zweite Scharscheibe (6, 17, 43, 68, 83), die durch ein zweites Lager (18, 44, 69) mit einem zweiten Innenring (19, 45, 70, 87) drehbar gelagert ist, wobei die erste Scharscheibe (5, 9, 39, 64, 82) und die zweite Scharscheibe (6, 17, 43, 68, 83) zueinander geneigt angeordnet sind, **gekennzeichnet durch** einen gemeinsamen Außenring (14, 40, 71), der den ersten Innenring (16, 42, 67, 86) und den zweiten Innenring (19, 45, 70, 87) zumindest teilweise umgibt, wobei das erste Lager (15, 41, 66) in einem ersten Zwischenraum (20, 46, 72) zwischen dem gemeinsamen Außenring (14, 40, 71) und dem ersten Innenring (16, 42, 67, 86) und wobei das zweite Lager in einem zweiten Zwischenraum (21, 47, 73) zwischen dem gemeinsamen Außenring (14, 40, 71) und dem zweiten Innenring (19, 45, 70, 87) angeordnet ist.

2. Doppelscheibenschar (8, 31, 63, 81) nach Anspruch 1, wobei der gemeinsame Außenring (14, 40, 71) zwei Fortsätze (22, 23) mit je mindestens einer Durchgangsbohrung (24, 25) umfasst und wobei die Fortsätze (22, 23) derart ausgebildet sind, dass zwischen den beiden Fortsätzen (22, 23) ein Teil (4) eines Scharhalters (2) mit mindestens einer Durchgangsöffnung (26) angeordnet werden kann, und dass mindestens ein Sicherungselement (11, 12, 13) durch die Durchgangsbohrungen (24, 25) der zwei Fortsätze (22, 23) und durch die mindestens eine Durchgangsöffnung (26) des Teils (4) des Scharhalters (2) einbringbar ist, um eine feste, aber lösbare Verbindung zwischen der Doppelscheibenschar (8, 31, 63, 81) und dem Scharhalter (2) zu bilden.

3. Doppelscheibenschar (31) nach Anspruch 1 oder 2, wobei der erste Innenring (42) bzw. der zweite Innenring (45) jeweils mittels mindestens einer Drehsicherung (33, 34, 35, 36) drehsicher mit der ersten Scharscheibe (39) bzw. der zweiten Scharscheibe (43) verbunden ist.

4. Doppelscheibenschar (8, 31, 63, 81) nach einem der Ansprüche 1 bis 3, wobei der gemeinsame Außenring (14, 40, 71) als einteiliges Gussteil ausgebildet ist.

5. Doppelscheibenschar (8, 31) nach einem der Ansprüche 1 bis 4, wobei die erste Scharscheibe (9, 39) bzw. die zweite Scharscheibe (17, 43) in einem Zentralbereich mindestens eine Scheibenbohrung (27, 28, 48, 49, 50, 51) umfasst, wobei der erste Innenring (16, 42) bzw. der zweite Innenring (19, 45) mindestens eine Innenringbohrung (29, 30, 52, 53, 54, 55) mit einem Innengewinde umfasst und wobei ein erster Teil einer Verbindungsvorrichtung (10, 32, 56, 57, 58, 59, 60) durch die mindestens eine Scheibenbohrung (27, 28, 48, 49, 50, 51) der ersten Scharscheibe (9, 39) bzw. der zweiten Scharscheibe (17, 43) aufgenommen und ein zweiter Teil der Verbindungsvorrichtung (10, 32, 56, 57, 58, 59, 60) mit einem Außengewinde durch die mindestens eine Innenringbohrung (29, 30, 52, 53, 54, 55) des ersten Innenrings (16, 42) bzw. des zweiten Innenrings (19, 45) aufgenommen ist, so dass eine feste, aber lösbare Verbindung zwischen der ersten Scharscheibe (5, 39) bzw. der zweiten Scharscheibe (17, 43) und dem ersten Innenring (16, 42) bzw. dem zweiten Innenring (19, 45) ausgebildet ist.

6. Doppelscheibenschar (63, 81) nach einem der Ansprüche 1 bis 4, wobei die erste Scharscheibe (64, 82) bzw. die zweite Scharscheibe (68, 83) in einem Zentralbereich eine Scheibenbohrung (74, 75) umfasst und wobei der erste Innenring (67, 86) bzw. der zweite Innenring (70, 87) einen Zapfen (76, 77, 90, 91) mit einem Außengewinde umfasst, der durch die Scheibenbohrung (74, 75) hindurch reicht und mittels einer aufgebrachten Verbindungsvorrichtung (65, 78, 92, 93) mit Innengewinde eine feste, aber lösbare Verbindung zwischen der ersten Scharscheibe (64, 82) bzw. der zweiten Scharscheibe (68, 83) und dem ersten Innenring (67, 86) bzw. dem zweiten Innenring (70, 87) bildet.

7. Doppelscheibenschar (8, 31, 63) nach einem der Ansprüche 1 bis 6, wobei die erste Scharscheibe (5, 39, 64) und die zweite Scharscheibe (17, 43, 68) als im Wesentlichen ebene Scheiben ausgebildet sind.

8. Doppelscheibenschar (81) nach einem der Ansprüche 1 bis 6, wobei die erste Scharscheibe (82) bzw. die zweite Scharscheibe (83) eine zentrale, schalenförmige Wölbung (84, 85) und der erste Innenring (86) bzw. der zweite Innenring (87) eine zentrale, schalenförmige Vertiefung (88, 89) umfassen, wobei die schalenförmige Wölbung (84, 85) und die schalenförmige Vertiefung (88, 89) derart ausgebildet sind, dass eine formschlüssige Passung zwischen der schalenförmigen Wölbung (84, 85) und der schalenförmigen Vertiefung (88, 89) besteht.

9. Doppelscheibenschar (8, 31, 63, 81) nach einem der Ansprüche 1 bis 8, wobei in einem ersten Bereich bzw. in einem zweiten Bereich, in dem der erste Innenring (16, 42, 67, 86) bzw. der zweite Innenring (19, 45, 70, 87), die erste Scharscheibe (5, 39, 64, 82) bzw. die zweite Scharscheibe (17, 43, 68, 83) und der gemeinsame Außenring (14, 40, 71) aneinander grenzen, eine erste Dichtungsvorrichtung (37, 79) bzw. eine zweite Dichtungsvorrichtung (38, 80) angeordnet ist.

## Claims

1. Double disc coulter (1, 8, 31, 63, 81) comprising a first coulter disc (5, 9, 39, 64, 82) which is mounted rotatably by a first bearing (15, 41, 66) with a first inner ring (16, 42, 67, 86), and a second coulter disc (6, 17, 43, 68, 83) which is mounted rotatably by a second bearing (18, 44, 69) with a second inner ring (19, 45, 70, 87), wherein the first coulter disc (5, 9, 39, 64, 82) and the second coulter disc (6, 17, 43, 68, 83) are arranged inclined with respect to each other, **characterized by** a common outer ring (14, 40, 71) which at least partially surrounds the first inner ring (16, 42, 67, 86) and the second inner ring (19, 45, 70, 87), wherein the first bearing (15, 41, 66) is arranged in a first intermediate space (20, 46, 72) between the common outer ring (14, 40, 71) and the first inner ring (16, 42, 67, 86), and wherein the second bearing is arranged in a second intermediate space (21, 47, 73) between the common outer ring (14, 40, 71) and the second inner ring (19, 45, 70, 87).

2. Double disc coulter (8, 31, 63, 81) according to Claim 1, wherein the common outer ring (14, 40, 71) comprises two extensions (22, 23) each having at least one through hole (24, 25), and wherein the extensions (22, 23) are designed in such a manner that a part (4) of a coulter holder (2) having at least one through opening (26) can be arranged between the two extensions (22, 23), and in that at least one securing element (11, 12, 13) can be introduced through the through holes (24, 25) in the two extensions (22, 23) and through the at least one through opening (26) in the part (4) of the coulter holder (2) in order to form a fixed, but releasable connection between the double disc coulter (8, 31, 63, 81) and the coulter holder (2).

3. Double disc coulter (31) according to Claim 1 or 2, wherein the first inner ring (42) or the second inner ring (45) is in each case connected to the first coulter disc (39) or to the second coulter disc (43) in a manner secure against rotation by means of at least one means for securing against rotation (33, 34, 35, 36).

4. Double disc coulter (8, 31, 63, 81) according to one of Claims 1 to 3, wherein the common outer ring (14, 40, 71) is designed as an integral cast part.

5. Double disc coulter (8, 31) according to one of Claims 1 to 4, wherein the first coulter disc (9, 39) or the second coulter disc (17, 43) comprises at least one disc hole (27, 28, 48, 49, 50, 51) in a central region, wherein the first inner ring (16, 42) or the second inner ring (19, 45) comprises at least one inner ring hole (29, 30, 52, 53, 54, 55) with an internal thread, and wherein a first part of a connecting device (10, 32, 56, 57, 58, 59, 60) is accommodated by the at least one disc hole (27, 28, 48, 49, 50, 51) in the first coulter disc (9, 39) or the second coulter disc (17, 43), and a second part of the connecting device (10, 32, 56, 57, 58, 59, 60) having an external thread is accommodated by the at least one inner ring hole (29, 30, 52, 53, 54, 55) of the first inner ring (16, 42) or of the second inner ring (19, 45) such that a fixed, but releasable connection is formed between the first coulter disc (5, 39) or the second coulter disc (17, 43) and the first inner ring (16, 42) or the second inner ring (19, 45).

6. Double disc coulter (63, 81) according to one of Claims 1 to 4, wherein the first coulter disc (64, 82) or the second coulter disc (68, 83) comprises a disc hole (74, 75) in a central region, and wherein the first inner ring (67, 86) or the second inner ring (70, 87) comprises a pin (76, 77, 90, 91) having an external thread, which reaches through the disc hole (74, 75) and, by means of an applied connecting device (65, 78, 92, 93) having an internal thread, forms a fixed, but releasable connection between the first coulter disc (64, 82) or the second coulter disc (68, 83) and the first inner ring (67, 86) or the second inner ring (70, 87).

7. Double disc coulter (8, 31, 63) according to one of Claims 1 to 6, wherein the first coulter disc (5, 39, 64) and the second coulter disc (17, 43, 68) are designed as substantially flat discs.

8. Double disc coulter (81) according to one of Claims 1 to 6, wherein the first coulter disc (82) and the second coulter disc (83) comprise a central shell-shaped curvature (84, 85), and the first inner ring (86) and the second inner ring (87) comprise a central shell-shaped depression (88, 89), wherein the shell-shaped curvature (84, 85) and the shell-shaped depression (88, 89) are designed in such a manner that there is a form fit between the shell-shaped curvature (84, 85) and the shell-shaped depression (88, 89).

9. Double disc coulter (8, 31, 63, 81) according to one of Claims 1 to 8, wherein a first sealing device (37, 79) or a second sealing device (38, 80) is arranged in a first region or in a second region, in which the first inner ring (16, 42, 67, 86) or the second inner ring (19, 45, 70, 87), the first coulter disc (5, 39, 64, 82) or the second coulter disc (17, 43, 68, 83) and the common outer ring (14, 40, 71) are adjacent to one another.

## Revendications

1. Soc à double disque (1, 8, 31, 63, 81) comprenant un premier disque de soc (5, 9, 39, 64, 82) qui est supporté de manière rotative par un premier palier (15, 41, 66) avec une première bague intérieure (16, 42, 67, 86) et un deuxième disque de soc (6, 17, 43, 68, 83) qui est supporté de manière rotative par un deuxième palier (18, 44, 69) avec une deuxième bague intérieure (19, 45, 70, 87), le premier disque de soc (5, 9, 39, 64, 82) et le deuxième disque de soc (6, 17, 43, 68, 83) étant disposés de manière inclinée l'un par rapport à l'autre,
**caractérisé par** une bague extérieure commune (14, 40, 71) qui entoure au moins en partie la première bague intérieure (16, 42, 67, 86) et la deuxième bague intérieure (19, 45, 70, 87), le premier palier (15, 41, 66) étant disposé dans un premier espace intermédiaire (20, 46, 72) entre la bague extérieure commune (14, 40, 71) et la première bague intérieure (16, 42, 67, 86) et le deuxième palier étant disposé dans un deuxième espace intermédiaire (21, 47, 73) entre la bague extérieure commune (14, 40, 71) et la deuxième bague intérieure (19, 45, 70, 87).

2. Soc à double disque (8, 31, 63, 81) selon la revendication 1, dans lequel la bague extérieure commune (14, 40, 71) comprend deux saillies (22, 23) ayant chacune au moins un alésage traversant (24, 25) et les saillies (22, 23) étant réalisées de telle sorte qu'entre les deux saillies (22, 23) puisse être disposée une partie (4) d'un support de soc (2) avec au moins une ouverture de passage (26), et en ce qu'au moins un élément de fixation (11, 12, 13) peut être introduit à travers les alésages traversants (24, 25) des deux saillies (22, 23) et à travers l'au moins une ouverture de passage (26) de la partie (4) du support de soc (2) afin de former une connexion fixe mais détachable entre le soc à double disque (8, 31, 63, 81) et le support de soc (2).

3. Soc à double disque (31) selon la revendication 1 ou 2, dans lequel la première bague intérieure (42), respectivement la deuxième bague intérieure (45), est connectée de manière fixée en rotation à chaque fois au moyen d'au moins une fixation en rotation (33, 34, 35, 36) au premier disque de soc (39), respectivement au deuxième disque de soc (43).

4. Soc à double disque (8, 31, 63, 81) selon l'une quelconque des revendications 1 à 3, dans lequel la bague extérieure commune (14, 40, 71) est réalisée sous forme de pièce coulée d'une seule pièce.

5. Soc à double disque (8, 31) selon l'une quelconque des revendications 1 à 4, dans lequel le premier disque de soc (9, 39), respectivement le deuxième disque de soc (17, 43), comprend, dans une région centrale, au moins un alésage de disque (27, 28, 48, 49, 50, 51), la première bague intérieure (16, 42), respectivement la deuxième bague intérieure (19, 45), comprenant au moins un alésage de bague intérieure (29, 30, 52, 53, 54, 55) avec un filetage intérieur et une première partie d'un dispositif de connexion (10, 32, 56, 57, 58, 59, 60) étant reçue à travers l'au moins un alésage de disque (27, 28, 48, 49, 50, 51) du premier disque de soc (9, 39), respectivement du deuxième disque de soc (17, 43), et une deuxième partie du dispositif de connexion (10, 32, 56, 57, 58, 59, 60) étant reçue avec un filetage extérieur à travers l'au moins un alésage de bague intérieure (29, 30, 52, 53, 54, 55) de la première bague intérieure (16, 42), respectivement de la deuxième bague intérieure (19, 45), de telle sorte qu'une connexion fixe mais détachable soit réalisée entre le premier disque de soc (5, 39), respectivement le deuxième disque de soc (17, 43), et la première bague intérieure (16, 42), respectivement la deuxième bague intérieure (19, 45).

6. Soc à double disque (63, 81) selon l'une quelconque des revendications 1 à 4, dans lequel le premier disque de soc (64, 82), respectivement le deuxième disque de soc (68, 83), comprend, dans une région centrale, un alésage de disque (74, 75) et la première bague intérieure (67, 86), respectivement la deuxième bague intérieure (70, 87), comprend un tourillon (76, 77, 90, 91) avec un filetage extérieur qui s'étend à travers l'alésage de disque (74, 75) et forme, au moyen d'un dispositif de connexion monté (65, 78, 92, 93) avec un filetage intérieur, une connexion fixe mais détachable entre le premier disque de soc (64, 82), respectivement le deuxième disque de soc (68, 83), et la première bague intérieure (67, 86), respectivement la deuxième bague intérieure (70, 87).

7. Soc à double disque (8, 31, 63) selon l'une quelconque des revendications 1 à 6, dans lequel le premier disque de soc (5, 39, 64) et le deuxième disque de soc (17, 43, 68) sont réalisés sous forme de disques essentiellement plans.

8. Soc à double disque (81) selon l'une quelconque des revendications 1 à 6, dans lequel le premier disque de soc (82), respectivement le deuxième disque de soc (83), comprend une courbure centrale en forme de coque (84, 85) et la première bague intérieure (86), respectivement la deuxième bague intérieure (87), comprend un renfoncement central en forme de coque (88, 89), la courbure en forme de coque (84, 85) et le renfoncement en forme de coque (88, 89) étant réalisés de manière à obtenir un ajustement par engagement par correspondance de formes entre la courbure en forme de coque (84, 85) et le renfoncement en forme de coque (88, 89).

9. Soc à double disque (8, 31, 63, 81) selon l'une quelconque des revendications 1 à 8, dans lequel un premier dispositif d'étanchéité (37, 79), respectivement un deuxième dispositif d'étanchéité (38, 80), est disposé dans une première région, respectivement dans une deuxième région, dans laquelle la première bague intérieure (16, 42, 67, 86), respectivement la deuxième bague intérieure (19, 45, 70, 87), le premier disque de soc (5, 39, 64, 82), respectivement le deuxième disque de soc (17, 43, 68, 83), et la bague extérieure commune (14, 40, 71) sont adjacents les uns aux autres.
